# EUROPEAN PATENT APPLICATION

(11) **EP 4 439 915 A1**
(43) Date of publication of application: **02.10.2024**
(21) Application number: 23167622.2
(22) Date of filing: 12.04.2023
(51) Int. Cl.: H02J 7/00

(54) **BATTERY ENERGY STORAGE SYSTEM AND METHOD THEREFOR**

(30) Priority: 29.03.2023 CN 202310325018
(71) Applicant: Hitachi Energy Ltd, 8050 Zürich (CH)
(72) Inventor: HUANG, Xing, Beijing, 100024 (CN); YANG, XiaoBo, Beijing, 100015 (CN); SU, CuiCui, Beijing, 102200 (CN)
(74) Representative: Vossius & Partner Patentanwälte Rechtsanwälte mbB

(57) **Abstract**

A battery energy storage system (BESS) and a method therefor is disclosed. The BESS includes a power converter system (PCS) for charging/discharging a battery including at least one battery module by using a superimposed control signal in which an electrochemical impedance spectra (EIS) reference signal for a state of health (SOH) evaluation of the battery is superimposed on a control signal for charging/discharging the battery. The EIS reference signal has a frequency selected for EIS. The BESS includes at least one sensor for detecting response data of the battery in the charging/discharging via the superimposed control signal. The BESS includes a plurality levels of controller distributed in the BESS, the respective levels of controller being in communication with each other and the response data of the battery being accessible to the respective levels of controller. The SOH evaluation of the battery is conducted in such a dynamic manner that the response data of the battery is processed at any level of controller to obtain a result for the SOH evaluation.

## Description

### TECHNICAL FIELD

The present disclosure relates to the field of power conversion, and more specifically, to a battery energy storage system (BESS) including a power converter system (PCS) and a method therefor.

### BACKGROUND

Electrochemical Impedance Spectra (EIS) has been widely used to monitor the health condition of a battery. In order for this, a typical solution is to use offline monitoring, in which a special designed equipment with the EIS function is used offline to measure the health condition of the battery. This, however, limits the application of the EIS, since the user has to obtain a result of the monitoring offline as well.

A process of online EIS monitoring is demanded as an increasingly large number of batteries are used with the BESS. The online EIS monitoring of the health condition of the battery is crucial to performance and safety of the BESS, which urges to find a new solution to realize the online EIS monitoring in the BESS to which massive batteries are connected.

### SUMMARY

The present disclosure provides a BESS for enabling an online state of health (SOH) evaluation of a battery and a method therefor.

According to an aspect of the present disclosure, a BESS is provided. The BESS includes a PCS for charging/discharging a battery including at least one battery module by using a superimposed control signal in which an EIS reference signal for an SOH evaluation of the battery is superimposed on a control signal for charging/discharging the battery. The EIS reference signal has a frequency selected for EIS. The BESS includes at least one sensor for detecting response data of the battery in the charging/discharging via the superimposed control signal. The BESS includes a plurality levels of controller distributed in the BESS. The respective levels of controller are in communication with each other and the response data of the battery are accessible to the respective levels of controller. The SOH evaluation of the battery is conducted in such a dynamic manner that the response data of the battery is processed at any level of controller to obtain a result for the SOH evaluation.

According to a further aspect of the present disclosure, a method for a BESS is provided. The BESS includes a PCS, at least one sensor, and a plurality levels of controller distributed in the BESS. The method includes charging/discharging, via the PCS, a battery including at least one battery module by a superimposed control signal in which an EIS reference signal for an SOH evaluation of the battery is superimposed on a control signal for charging/discharging the battery. The EIS reference signal has a frequency selected for EIS. The method includes detecting, via at least one sensor, response data of the battery in the charging/discharging by the superimposed control signal. The respective levels of controller are in communication with each other and the response data of the battery are accessible to the respective levels of controller. The SOH evaluation of the battery is conducted in such a dynamic manner that the response data of the battery is processed at any level of controller to obtain a result for the SOH evaluation.

According to embodiments of the present disclosure, the online SOH evaluation of the battery can be achieved dynamically to enable large data for evaluating the SOH of the battery to be processed in time.

It should be understood that the content described in this section is not intended to identify critical or important features of the embodiments of the present disclosure, and is not used to limit the scope of the present disclosure either. Other features of the present disclosure will be easily understood through the following specification.

### BRIEF DESCRIPTION OF THE DRAWINGS

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.
Fig. 1 is a schematic diagram illustrating a BESS according to an embodiment of the present disclosure.
Figs. 2A and 2B are schematic diagrams illustrating a superimposed control signal in the charging/discharging, including an EIS reference signal superimposed on a control signal.
Figs. 3A to 3C are schematic diagrams illustrating arrangement of a sensor relative to a battery.
Fig. 4 is a schematic diagram illustrating a BESS according to another embodiment of the present disclosure.
Fig. 5 is a flow chart illustrating a method for a BESS according to an embodiment of the present disclosure.

### DETAILED DESCRIPTION OF THE EMBODIMENTS

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

According to embodiments of the present disclosure, a BESS for enabling an online SOH evaluation of a battery and a method therefor are provided.

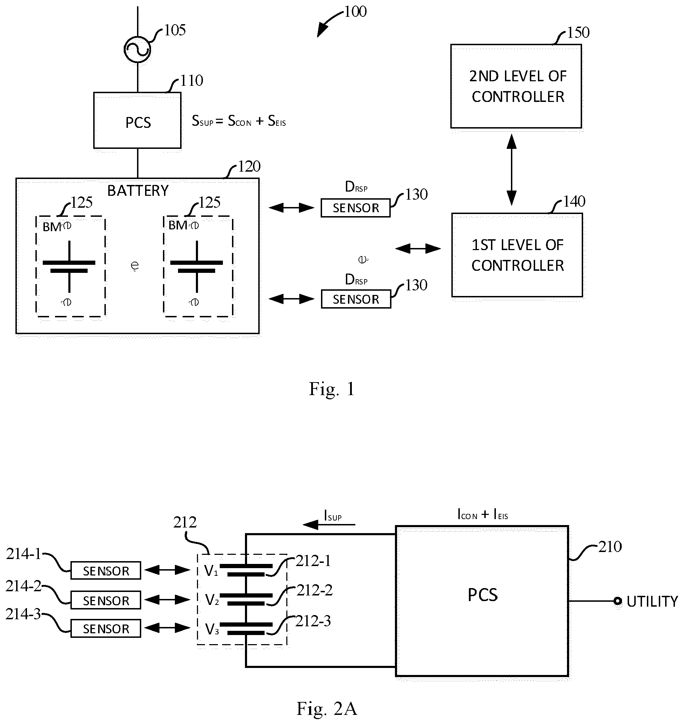

Fig. 1 is a schematic diagram illustrating a BESS 100 according to an embodiment of the present disclosure.

As illustrated in Fig. 1, the BESS 100 includes a PCS 110 for charging/discharging a battery 120, at least one sensor 130 for detecting response data D_{RSP} of the battery 120 in the charging/discharging, and a first and second levels of controller 140 and 150 distributed in the BESS 100.

The PCS 110 may be coupled to a power source 105, which may be, for example, a power grid for generating an AC power. In an example, the PCS 110 may include a DC/AC power converter coupling to the power source 105, or may include a DC/DC power converter coupling to the power source 105 with an DC/AC power converter arranged therebetween. In another example, the PCS 110 may include multiple DC/AC power converters coupled in parallel to the power source 105, in which case, for example, each DC/AC power converter may be associated with a battery (e.g., a battery module). In yet another example, the PCS 110 may include multiple DC/DC power converters coupled in parallel to a DC bus, which is further coupled to the power source 105 via a DC/AC power converter, in which case, for example, each DC/DC power converter may be associated with a battery (e.g., a battery module). It would be realized by those skilled in the art that the topology of the power converter in the PCS 110 may be designed variously based on actual applications. Accordingly, the topology of the power converter may have various modifications, alterations or variants, without departing from the spirit and scope of the disclosure, which are not to be limited to the following described exemplary examples.

The PCS 110 is configured to charge/discharge the battery 120 by using a superimposed control signal S_{SUP}. The superimposed control signal S_{SUP} is comprised of a control signal S_{CON} for charging/discharging the battery 120 and an EIS reference signal S_{EIS} for an SOH evaluation of the battery 120. That is, the EIS reference signal S_{EIS} is superimposed on the control signal ScoN.

The control signal S_{CON}, the EIS reference signal S_{EIS} and the superimposed control signal S_{SUP} may include either a current signal or a voltage signal depending on a topology of the battery 120, e.g., how the battery 120 is constructed or configured in terms of its structure or architecture. In some embodiments, the battery 120 includes at least one battery module (BM) 125. In an example, in the case that the battery module 125 includes at least one battery cell connected in series, the control signal S_{CON}, the EIS reference signal S_{EIS} and the superimposed control signal S_{SUP} may include the current signal. Similarly, in the case that the battery module 125 includes at least one battery cell connected in parallel, the control signal S_{CON}, the EIS reference signal S_{EIS} and the superimposed control signal S_{SUP} may include the voltage signal.

In some embodiments, the EIS reference signal S_{EIS} has a frequency selected for EIS. The frequency selected for EIS may be determined based on a property to be monitored or a property of interest for the battery 120. Since an impedance measured through EIS is closely related to the various properties of battery 120, such as an ohmic resistance of an electrolyte, a capacitance of the solid electrolyte interphase (SEI) and the like, the frequency selected for EIS may correspond to the property of interest based on the actual application, which may not be limited to the above examples. Each of the properties may correspond to a certain frequency or frequency range, from 0Hz (i.e., a DC frequency) to several µHz and up to several MHz (i.e., an AC frequency). For example, in order to monitor the ohmic resistance of the electrolyte, a frequency selected from the ultrahigh frequency range may be adopted. In an example, the generation of the EIS reference signal S_{EIS} may include pulse-width modulation of the EIS reference signal S_{EIS}. As such, various frequencies of interest can be obtained through various modulations. In an example, the EIS reference signal S_{EIS} may have a certain waveform, for example, a sine wave, a square wave, a triangular wave and the like. The waveform for the EIS reference signal S_{EIS} may be determined based on the actual applications, which may not be limited to the above examples.

The at least one sensor 130 is configured to detect response data D_{RSP} of the battery 120 in the charging/discharging via the superimposed control signal S_{SUP}. In an example, the at least one sensor 130 may be communicatively coupled to the battery 120. Alternatively or additionally, the at least one sensor 130 may be arranged at a suitable position close to the battery 120 to facilitate the detection of the response data D_{RSP} of the battery 120 in the charging/discharging.

In an example, in the case that the battery module 125 includes at least one battery cell (e.g., five battery cells), each battery cell may be provided with a sensor 130 (e.g., the five battery cells are provided with five sensors 130, respectively), or part of the at least one battery cell may be provided with a sensor 130 (e.g., two battery cells of the five battery cells are provided with two sensors 130, respectively).

In another example, the battery 120 may be arranged on multiple racks, with multiple battery modules arranged on a same rack. In this case, each rack may be provided with a sensor 130 (e.g., three racks are provided with three sensors 130, respectively), or part of the multiple racks are provided with a sensor 130 (e.g., the first rack of the three racks is provided with a sensor 130).

In yet another example, each of the multiple battery modules arranged on a same rack may be provided with a sensor 130 (e.g., ten battery modules on the same rack are provided with ten sensors 130, respectively), or part of the multiple battery modules arranged on the same rack may be provided with a sensor 130 (e.g., six battery modules of the ten battery modules on the same rack are provided with six sensors 130, respectively).

It would be realized by those skilled in the art that the above examples are shown for the purpose of illustration, and the at least one sensor 130 can be arranged based on which battery module(s) or cell(s) that the user is intended to monitor for evaluating the SOH. In addition, in the case that multiple sensors 130 are to be used, the number of the multiple sensors 130 may be determined in view of the cost, for example, the multiple sensors 130 may be arranged only on a rack level (e.g., each rack of the multiple racks is provided with a sensor 130) to save the cost.

The response data D_{RSP} of the battery 120 may indicate a feedback of the battery 120 to the superimposed control signal S_{SUP} in the charging/discharging, which may be processed and analyzed to evaluate the SOH of the battery 120.

Fig. 1 shows an embodiment in which two levels of controller, e.g., the first and second levels of controller 140 and 150 are distributed in the BESS 100. The first level of controller 140 may represent a lower-level of controller, and the second level of controller 150 may represent a higher-level of controller than the first level of controller 140. In an example, the lower-level of controller may be closer to the at least one sensor 130 than the higher-level of controller in a direction of data transmission. In Fig. 1, although the first level of controller 140 and the second level of controller 150 each is shown as a single block, multiple sub-controllers may be included in each of the first level of controller 140 and the second level of controller 150.

The first level of controller 140 and the second level of controller 150 are in communication with each other. The response data D_{RSP} of the battery 120 detected by the at least one sensors 130 are accessible to the first level of controller 140 and the second level of controller 150. In an example, the response data D_{RSP} of the battery 120 may be collected by the first level of controller 140 and uploaded to the second level of controller 150. In another example, the response data D_{RSP} of the battery 120 may be directly fetched by the second level of controller 150 without passing through the first level of controller 140.

The SOH evaluation of the battery 120 is conducted in such a dynamic manner that the response data D_{RSP} of the battery 120 is processed at the first level of controller 140, at the second level of controller 150, or at both of the first level of controller 140 and the second level of controller 150.

Herein, the SOH evaluation of the battery 120 refers to processing and analyzation of the response data D_{RSP} of the battery 120 so as to evaluate the SOH of the battery 120. In an example, the SOH evaluation of the battery 120 may include the evaluation of an individual battery module or cell within the battery 120, or may include the evaluation of a deviation among different battery cells, e.g., different battery cells in a string, or a deviation among different stings.

In an example, the processing of the response data D_{RSP} may be performed at the higher-level of controller (e.g., the second level of controller 150) after the response data D_{RSP} are uploaded from the lower-level of controller (e.g., the first level of controller 140), for example, attributing to a more robust processing capability of the higher-level of controller than the lower-level of controller. But, when so many sensors 130 are used that the response data D_{RSP} detected by those sensors 130 cannot be processed in time solely at the higher-level of controller due to a large traffic load among the two levels of controller during the data uploading, at least part of the processing may be shifted to the lower-level of controller, that is, at least part of the response data D_{RSP} may be processed at the lower-level of controller. Alternatively, all of the processing may be shifted to the lower-level of controller, that is, all of the response data D_{RSP} may be processed at the lower-level of controller, as long as its processing capability is sufficient to support such a processing. That is, the processing at the lower-level of controller may be determined based on the traffic load of the communication among the two levels of controller, and/or the processing capability of the lower-level of controller.

According to the embodiment of the present disclosure, not only the online SOH evaluation of the battery can be achieved by means of using the superimposed control signal in the charging/discharging, but also the online SOH evaluation can be achieved dynamically benefiting from the two levels of controller to ensure large data used for evaluating the SOH of the battery to be processed in time.

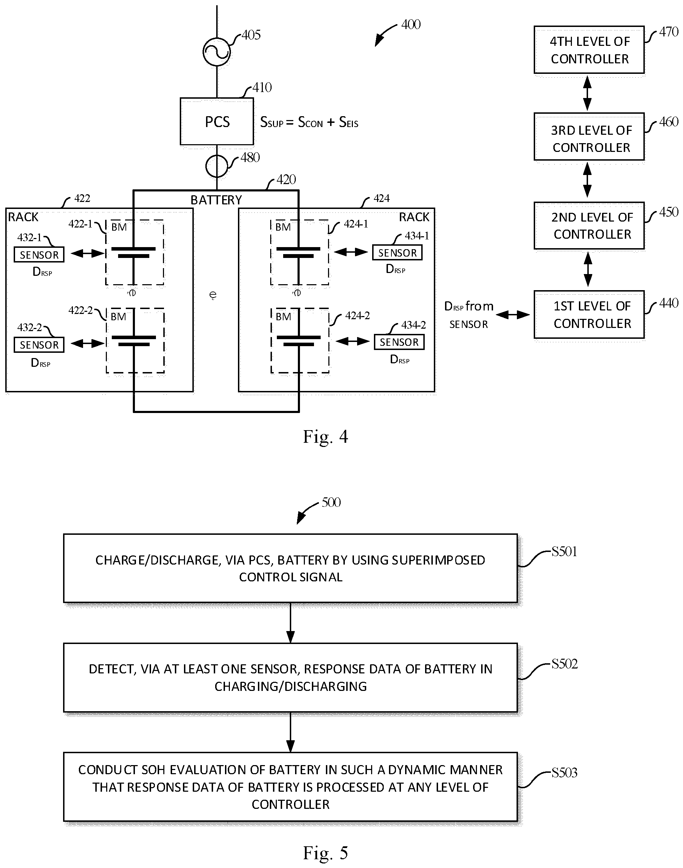

It is noted that Fig. 1 illustrates an embodiment of multiple levels of controller by an example of two levels of controller, the number of the levels of controller, however, can be further increased to enhance the dynamic mechanism for achieving the online SOH evaluation, since more options for performing the processing can be provided through an cooperation among the multiple levels of controller. As another embodiment of multiple levels of controller, Fig. 4 will be further described hereinafter as an example in which four levels of controller are included to bring a more dynamic effect, so that the large data used for evaluating the SOH of the battery can be processed in time.

Accordingly, a lifetime of the battery module or cell within the battery can be estimated online so that the battery module or cell in a unhealthy condition or even in fault can be identified online, enabling the user to replace such a battery module or cell in good time. Thus, the lifetime of the whole battery system can be balanced and optimized. In addition, the online SOH monitoring will also help to promote the application of a second-life battery, which is usually decommissioned from an EV (Electric Vehicle).

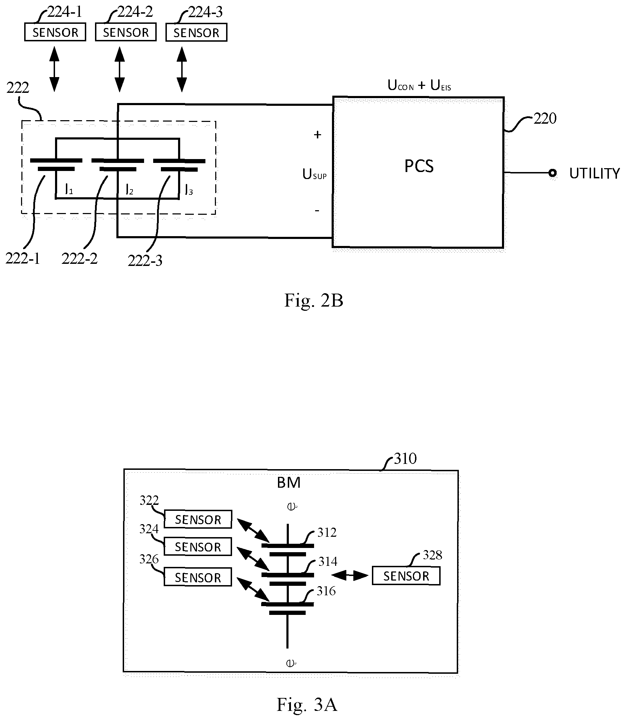

Figs. 2A and 2B are schematic diagrams illustrating a superimposed control signal in the charging/discharging, including an EIS reference signal superimposed on a control signal.

In an example, depending on the topology of the battery, the control signal, the EIS reference signal and the superimposed control signal may include either a current signal as shown in Fig. 2A or a voltage signal as shown in Fig. 2B.

As shown in Fig. 2A, a PCS 210 may deliver a superimposed control signal I_{SUP}, which includes an EIS reference signal I_{EIS} superimposed on a control signal I_{CON}, to a battery module 212 to charge/discharge the battery module 212. The PCS 210 may be coupled to the utility side (e.g., the power grid).

Fig. 2A shows an example that the battery module 212 includes first to third battery cells 212-1, 212-2 and 212-3 connected in series. Although three battery cells are shown for purpose of illustration, less or more battery cells are possible based on the actual applications.

As a feedback to the superimposed control signal I_{SUP}, which contains the predetermined EIS reference signal I_{EIS} having the selected frequency for EIS to monitor the SOH of the battery module 212, the first to third battery cells 212-1, 212-2 and 212-3 may generate respective voltage signals V₁, V₂ and V₃. Each of the voltage signals V₁, V₂ and V₃ may represent a voltage signal generated across the respective battery cell.

The voltage signals V₁, V₂ and V₃ may be detected by three voltage sensors 214-1, 214-2 and 214-3 that are communicatively coupled to the first to third battery cells 212-1, 212-2 and 212-3, respectively. For example, the three voltage detectors 214-1, 214-2 and 214-3 each is coupled to a respective one of the first to third battery cells 212-1, 212-2 and 212-3 in parallel to detect the respective one of the voltage signals V₁, V₂ and V₃ generated across the respective battery cell.

Subsequently, the impedance of each of the first to third battery cells 212-1, 212-2 and 212-3 may be calculated based on the superimposed control signal I_{SUP} and each of the voltage signals V₁, V₂ and V₃, e.g., via dividing each of the voltage signals V₁, V₂ and V₃ by the superimposed control signal I_{SUP}. Further, an impedance curve versus time for each of the first to third battery cells 212-1, 212-2 and 212-3, e.g., an AC impedance curve versus time or a DC impedance curve versus time (depending on the frequency selected for EIS), may be obtained as respective response data of the first to third battery cells 212-1, 212-2 and 212-3. Thus, the SOH evaluation of each of the first to third battery cells 212-1, 212-2 and 212-3 may be based on at least one of the AC impedance curve versus time and the DC impedance curve versus time.

As shown in Fig. 2B, a PCS 220 may deliver a superimposed control signal U_{SUP}, which includes an EIS reference signal U_{EIS} superimposed on a control signal U_{CON}, to a battery module 222 to charge/discharge the battery module 222. The PCS 220 may be coupled to the utility side (e.g., the power grid).

Fig. 2B shows an example that the battery module 222 includes first to third battery cells 222-1, 222-2 and 222-3 connected in parallel. Although three battery cells are shown for purpose of illustration, less or more battery cells are possible based on the actual applications.

As a feedback to the superimposed control signal U_{SUP}, which contains the predetermined EIS reference signal U_{EIS} having the selected frequency for EIS to monitor the SOH of the battery module 222, the first to third battery cells 222-1, 222-2 and 222-3 may generate respective current signals I₁, I₂ and I₃. Each of the current signals I₁, I₂ and I₃ may represent a current signal output from the respective battery cell.

The current signals I₁, I₂ and I₃ may be detected by three current sensors 224-1, 224-2 and 224-3 that are communicatively coupled to the first to third battery cells 222-1, 222-2 and 222-3, respectively. For example, the three current sensors 224-1, 224-2 and 224-3 each is coupled to a respective one of the first to third battery cells 222-1, 222-2 and 222-3 in series to detect the respective one of the current signals I₁, I₂ and I₃ output from the respective battery cell.

Subsequently, the impedance of each of the first to third battery cells 222-1, 222-2 and 222-3 may be calculated based on the superimposed control signal U_{SUP} and each of the current signals I₁, I₂ and I₃, e.g., via dividing the superimposed control signal U_{SUP} by each of the current signals I₁, I₂ and I₃. Further, an impedance curve versus time for each of the first to third battery cells 222-1, 222-2 and 222-3, e.g., an AC impedance curve versus time or a DC impedance curve versus time (depending on the frequency selected for EIS), may be obtained as respective response data of the first to third battery cells 222-1, 222-2 and 222-3. Thus, the SOH evaluation of each of the first to third battery cells 222-1, 222-2 and 222-3 may be based on at least one of the AC impedance curve versus time and the DC impedance curve versus time.

According to the embodiment of the present disclosure, the use of the voltage/current sensor can facilitate the SOH evaluation of the battery in the charging/discharging because the voltage/current signal is easy to be detected and calculated, which in turn facilitates the easy achievement of the online SOH evaluation.

Figs. 3A to 3C are schematic diagrams illustrating arrangement of a sensor relative to a battery.

According to an embodiment of the present disclosure, as illustrated in Figs 2A and 2B, the at least one sensor may include a voltage/current sensor, and in this case, the response data of the battery may include at least one of an AC impedance curve versus time and a DC impedance curve versus time, depending on the frequency selected for EIS.

Alternatively or additionally, the at least one sensor may include at least one of a temperature sensor, a swelling/expansion sensor and an ultrasound sensor, and in this case, the response data of the battery may include at least one of temperature information detected by the temperature sensor, deformation information detected by the swelling/expansion sensor and internal defect information detected by the ultrasound sensor. In an example, the temperature information is an important parameter for the SOH evaluation of the battery, and thus the temperature sensor may be further provided. The swelling/expansion sensor may include a strain/stress sensor, a force sensor, a fiber optic sensor and the like for detecting the deformation information of the battery.

Accordingly, the SOH evaluation of the battery may be based on at least one of the AC impedance curve versus time, the DC impedance curve versus time, the temperature information detected by the temperature sensor, the deformation information detected by the swelling/expansion sensor, and the internal defect information detected by the ultrasound sensor.

In this way, the SOH evaluation of the battery can be made accurately in various dimensions, and thus the battery module or cell within the battery in the unhealthy condition or even in fault can be identified accurately as well.

Fig. 3A shows an example in which a battery module 310 includes three battery cells 312, 314 and 316 connected in series. The battery cells 312, 314 and 316 may be provided with three sensors 322, 324 and 326, respectively. Alternatively or additionally, the battery module 310 may be provided with a sensor 328. It would be realized that, although Fig. 3A illustrates that each battery cell is provided with a sensor, it is possible that not all of the battery cells are provided with the respective sensors in consideration of the cost. It is also possible that the three battery cells 312, 314 and 316 are connected in parallel. Besides, it is also possible that less or more battery cells are provided, and the battery cells may be arranged in more than one string as illustrated.

In an example, each of the sensors 322, 324 and 326 may be the voltage/current sensor communicatively coupling to the respective one of the battery cells 312, 314 and 316. In another example, each of the sensors 322, 324 and 326 may be the temperature sensor, the swelling/expansion sensor or the ultrasound sensor arranged next to the respective one of the battery cells 312, 314 and 316 to facilitate the detection. In yet another example, each of the sensors 322, 324 and 326 may be selected from the group consisting of the voltage/current sensor, the temperature sensor, the swelling/expansion sensor and the ultrasound sensor. In yet another example, the sensor 328 may be selected from the group consisting of the voltage/current sensor, the temperature sensor, the swelling/expansion sensor and the ultrasound sensor, which is communicatively coupled to the battery module 310 or arranged next to the battery module 310 to facilitate the detection.

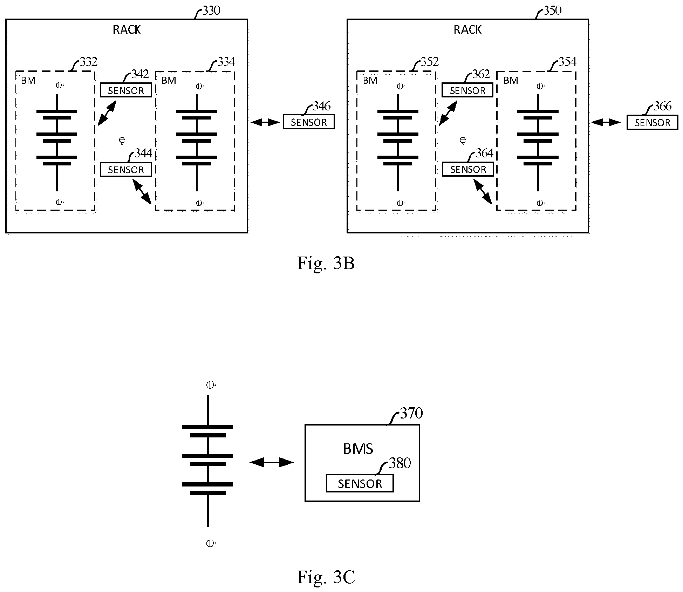

Fig. 3B shows an example in which the battery is arranged on two racks 330 and 350 each including two battery modules, that is, the battery modules 332 and 334 are provided on the rack 330, and the battery modules 352 and 354 are provided on the rack 350. Just as an example, each of the battery modules 332, 334 and 352, 354 may include three battery cells in series, similarly as illustrated in Fig. 3A.

The racks 330 and 350 may be provided with sensors 346 and 366, respectively. Alternatively or additionally, the battery modules 332, 334 and 352, 354 may be provided with sensors 342, 344 and 362, 364, respectively. It would be realized by those skilled in the art that, although Fig. 3B illustrates that each battery module is provided with a sensor, it is possible that not all of the battery modules are provided with the respective sensors in consideration of the cost. Similarly, it is possible that not all of the battery modules on the same rack are provided with the respective sensors in consideration of the cost.

Fig. 3C shows an example in which a battery management system (BMS) 370 is provided in the BESS. The BMS 370 may include a sensor 380 as described herein. The sensor 380 may be arranged within the BMS 370 as illustrated in Fig. 3C. Alternatively, the sensor 380 may be separated from the BMS 370.

In this way, the sensor may be flexibly designed in its arrangement relative to the battery in view of the application of the BMS, so as to save the cost and to facilitate the easy achievement of the online SOH evaluation.

Fig. 4 is a schematic diagram illustrating a BESS 400 according to another embodiment of the present disclosure.

As illustrated in Fig. 4, the BESS 400 include a PCS 410 for charging/discharging a battery 420, at least one sensor (e.g., sensors 432-1, 432-2, 434-1 and 434-2 as shown) for detecting response data D_{RSP} of the battery 420 in the charging/discharging, and a first to fourth levels of controller 440, 450, 460 and 470 distributed in the BESS 400.

The BESS 400 further includes a voltage/current sensor 480 arranged between the PCS 410 and the battery 420. In an example, in order to realize a voltage/current control for the battery 420, the voltage/current sensor 480 may be installed in a DC bus of the battery 420.

Similar to the embodiment as illustrated in Fig. 1, the PCS 410 may be coupled to a power source 405. The PCS 410 is configured to charge/discharge the battery 420 by using a superimposed control signal S_{SUP}. The superimposed control signal S_{SUP} is comprised of a control signal S_{CON} for charging/discharging the battery 420 and an EIS reference signal S_{EIS} for an SOH evaluation of the battery 420. In an example, The control signal S_{CON}, the EIS reference signal S_{EIS} and the superimposed control signal S_{SUP} may be similar to the embodiments as illustrated in Fig. 1 and Figs. 2A and 2B, and thus further details are omitted here.

In Fig. 4, an example in which the battery 420 is arranged on two racks 422 and 424, two battery modules 422-1 and 422-2 being arranged on the rack 422, and two battery modules 424-1 and 424-2 being arranged on the rack 424, is shown.

In the example as shown in Fig. 4, the two battery modules 422-1 and 422-2 are provided with two sensor 432-1 and 432-2, respectively. Similarly, the two battery modules 424-1 and 424-2 are provided with two sensor 434-1 and 434-2, respectively. These sensors are configured to detect response data D_{RSP} of the battery 420 (e.g., the battery modules 422-1, 422-2, 424-1 and 424-2) in the charging/discharging. The response data D_{RSP} of the battery 420 may indicate a feedback of the battery 420 to the superimposed control signal S_{SUP} in the charging/discharging, which may be processed and analyzed to evaluate the SOH of the battery 420.

Fig. 4 illustrates an embodiment in which four levels of controller, e.g., the first to fourth levels of controller 440, 450, 460 and 470 are provided. The four levels of controller are in communication with each other and the response data D_{RSP} of the battery 420 are accessible to the four levels of controller. Although the first to fourth levels of controller 440, 450, 460 and 470 each is shown as a single block in Fig. 4, multiple sub-controllers may be included in each level of controller.

The SOH evaluation of the battery 420 is conducted in such a dynamic manner that the response data D_{RSP} of the battery 420 is processed at any level of controller.

In some embodiments, each battery module (e.g., each of the battery modules 422-1 and 422-2 on the rack 422) may include at least one battery cell (e.g., as illustrated in Fig. 3A). In this case, the first level of controller 440 may be configured to process the response data D_{RSP} of the battery module, or each or part of the at least one battery cell in the battery module. Accordingly, the SOH evaluation of the battery 420 (e.g., the battery module or cell) based on the processing can be conducted at the first level of controller 440 locally.

In an example, the first level of controller 440 may be a lower-level of controller than the second to fourth levels of controller 450, 460 and 470. If the traffic load among these levels of controller is allowed, the first level of controller 440 may choose to upload the response data D_{RSP} of the battery 420 to a higher-level of controller (e.g., the second level of controller 450). But if the traffic load is large due to quite a number of sensors configured for a large topology of the battery (e.g., a mass of battery cells are included in the battery), the first level of controller 440 may choose to process at least part of the response data D_{RSP} of the battery 420 locally. Accordingly, the processing at the first level of controller 440 may be determined based on the traffic load of the communication among the respective levels of controller and/or the processing capability of the first level of controller 440.

In some embodiments, similar to the first level of controller 440, the second level of controller 450 may be configured to process the response data D_{RSP} of multiple battery modules on a same rack (e.g., the battery modules 422-1 and 422-2 on the rack 422), each or part of the multiple battery modules on the same rack, or each or part of the at least one battery cell in the battery module.

In an example, the rack may be provided with a sensor (e.g., a rack-level sensor) to detect the response data D_{RSP} of the battery 420 at a rack level, so that the second level of controller 450 may obtain the response data D_{RSP} of multiple battery modules on a same rack directedly from the rack-level sensor. Alternatively or additionally, the second level of controller 450 may obtain the response data D_{RSP} of the multiple battery modules on the same rack from the uploading of the first level of controller 440, e.g., in the case each of the multiple battery modules is provided with a sensor.

In an example, the second level of controller 450 may be a higher-lever controller than the first level of controller 440. As described above, the first level of controller 440 may choose to upload the response data D_{RSP} of the battery 420 to the second level of controller 450 to conduct the SOH evaluation. Similar to the first level of controller 440, the second level of controller 450 may also choose to conduct the processing locally or continue to upload the response data D_{RSP} of the battery 420 to an even higher-level of controller, e.g., the third level of controller 460. Accordingly, the processing at the second level of controller 450 may be determined based on the traffic load of the communication among the respective levels of controller and/or the processing capability of the second level of controller 450.

In this way, the first level of controller 440 and the second level of controller 450 can undertake at least part of the task for the SOH evaluation dynamically by referencing the factors such as the traffic load and/or the processing capability. Therefore, not all of the response data have to be processed centrally in a certain level of controller, thus reducing the data traffic for achieving the online SOH evaluation.

In some embodiments, the third level of controller 460 may be configured to process the response data D_{RSP} of all the multiple battery modules on different racks (e.g., the battery modules 422-1 and 422-2 on the rack 422, and the battery modules 424-1 and 424-2 on the rack 424), all the multiple battery modules on the same rack, each or part of the multiple battery modules on the same rack, or each or part of the at least one battery cell in the battery module.

In an example, the third level of controller 460 may be a higher-lever controller than the second level of controller 450. Accordingly, the response data D_{RSP} of the battery 420 may be transmitted from the second level of controller 450 to the third level of controller 460 before or after being processed at the second level of controller 450. In an example, the third level of controller 460 may have a more robust processing capability than the first and second levels of controller. As described above, the second level of controller 450 may choose to upload the response data D_{RSP} of the battery 420 to the third level of controller 460 to conduct the SOH evaluation. Alternatively or additionally, the second level of controller 450 may conduct the SOH evaluation to obtain a result thereof, and then upload the result of the SOH evaluation to the third level of controller 460, and in this case, the third level of controller 460 may function to collect and summarize the result from the second level of controller 450.

In some embodiments, the third level of controller 460 may be further configured to control superimposition of the EIS reference signal S_{EIS} on the control signal S_{CON} for charging/discharging the battery 420. In an example, the third level of controller 460 may be configured for the PCS 410, enabling the PCS 410 to charge/discharge the battery 420 by using the superimposed control signal S_{SUP}.

In this way, the higher-level of controller can be cooperated with the lower-level controller dynamically to facilitate the achievement of the online SOH evaluation.

In some embodiments, the fourth level of controller 470 may be configured to determine and indicate the EIS reference signal S_{EIS} to be superimposed on the control signal S_{CON} to the PCS 410. Accordingly, the fourth level of controller 470 may control the superimposition of the EIS reference signal S_{EIS} on the control signal S_{CON} for charging/discharging the battery 420.

The fourth level of controller 470 may be further configured to evaluate a capacity of the battery 420 and/or obtain an open circuit voltage (OCV) curve of the battery 420. In an example, the fourth level of controller 470 may be arranged in the distribution network operator or the station operator, such as the utility side.

In an example, the capacity of the battery 420 and the OCV curve of the battery 420 may be considered as factors for evaluating the SOH of the battery 420. Accordingly, the SOH evaluation of the battery 420 may be further based on the capacity of the battery and the OCV curve of the battery, in addition to the AC/DC impedance curve versus time, the temperature information, the deformation information and the internal defect information as aforementioned.

According to the embodiment of the present disclosure, four levels of controller 440, 450, 460 and 470 are set forth as an example of multiple levels of controller. In this way, though the cooperation among the multiple levels of controller, more options for performing the processing can be provided to ensure the large data used for evaluating the SOH of the battery to be processed in time, thus achieving the online SOH evaluation dynamically to enable the lifetime of the whole battery system to be balanced and optimized.

Fig. 5 is a flow chart illustrating a method 500 for a BESS according to an embodiment of the present disclosure.

In an example, the BESS may be the BESS 100 as illustrated in Fig. 1 or the BESS 400 as illustrated in Fig. 4. The BESS include a PCS, at least one sensor, and multiple levels of controller distributed in the BESS (e.g., the first and second levels of controller 140 and 150 as illustrated in Fig. 1, or the first to fourth levels of controller 440, 450, 460 and 470 as illustrated in Fig. 4).

As shown in Fig. 5, the method include steps S501 to S503.

In the step S501, the PCS charges/discharges a battery by using a superimposed control signal. The superimposed control signal is formed by an EIS reference signal for SOH evaluation of the battery superimposed on a control signal for charging/discharging the battery. The EIS reference signal has a frequency selected for EIS.

The control signal, the EIS reference signal and the superimposed control signal may be similar to the embodiments as illustrated in Fig. 1, Figs. 2A and 2B, and Fig. 4, and thus further details are omitted here.

In the step S502, at least one sensor detects response data of the battery in the charging/discharging by the superimposed control signal.

The at least one sensor may be similar to the embodiments as illustrated in Fig. 1, Figs. 2A and 2B, Figs. 3A to 3C and Fig. 4, and thus further details are omitted here.

The respective levels of controller are in communication with each other, and the response data of the battery are accessible to the respective levels of controller.

In the step S503, the SOH evaluation of the battery is conducted in such a dynamic manner that the response data of the battery is processed at any level of controller to obtain a result for the SOH evaluation.

The dynamic processing mechanism for the multiple levels of controller may be similar to that has been described in details in Fig. 1 and Fig. 4, and thus further details are omitted here.

In this way, the online SOH evaluation can be achieved dynamically benefiting from the multiple levels of controller to ensure large data for evaluating the SOH of the battery to be processed in time.

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. A battery energy storage system (BESS), comprising:
a power converter system (PCS) for charging/discharging a battery including at least one battery module by using a superimposed control signal in which an electrochemical impedance spectra (EIS) reference signal for a state of health (SOH) evaluation of the battery is superimposed on a control signal for charging/discharging the battery, wherein the EIS reference signal has a frequency selected for EIS;
at least one sensor for detecting response data of the battery in the charging/discharging via the superimposed control signal; and
a plurality levels of controller distributed in the BESS, wherein the respective levels of controller are in communication with each other and the response data of the battery are accessible to the respective levels of controller, and
wherein the SOH evaluation of the battery is conducted in such a dynamic manner that the response data of the battery is processed at any level of controller to obtain a result for the SOH evaluation.

2. The BESS according to claim 1, wherein each battery module includes at least one battery cell, and wherein the plurality levels of controller comprise a first level of controller configured to process the response data of the battery module, or each or part of the at least one battery cell in the battery module, and
wherein the processing at the first level of controller is determined based on a traffic load of the communication among the respective levels of controller and/or a processing capability of the first level of controller.

3. The BESS according to claim 1 or 2, wherein the plurality levels of controller comprise a second level of controller configured to process the response data of a plurality of the battery modules on a same rack among the at least one battery module, each or part of the plurality of the battery modules on the same rack, or each or part of the at least one battery cell in the battery module, and
wherein the processing at the second level of controller is determined based on a traffic load of the communication among the respective levels of controller and/or a processing capability of the second level of controller.

4. The BESS according to claim 3, wherein the plurality levels of controller comprise a third level of controller configured to process the response data of the at least one battery module on different racks, the plurality of the battery modules on the same rack among the at least one battery module, each or part of the plurality of the battery modules on the same rack, or each or part of the at least one battery cell in the battery module, and
wherein the response data are transmitted from the second level of controller before or after being processed at the second level of controller.

5. The BESS according to claim 4, wherein the third level of controller is further configured to control superimposition of the EIS reference signal on the control signal for charging/discharging the battery.

6. The BESS according to claim 5, wherein the plurality levels of controller comprise a fourth level of controller configured to determine and indicate the EIS reference signal to be superimposed on the control signal to the PCS, and optionally evaluate a capacity of the battery and/or obtain an open circuit voltage (OCV) curve of the battery.

7. The BESS according to any of claims 1 to 6, wherein the at least one sensor comprises a voltage/current sensor, and the frequency selected for EIS comprises at least one of an alternating current (AC) frequency and a direct current (DC) frequency, and
wherein the response data of the battery comprises at least one of an AC impedance curve versus time and a DC impedance curve versus time.

8. The BESS according to claim 7, wherein the at least one sensor further comprises at least one of a temperature sensor, a swelling/expansion sensor and an ultrasound sensor, and
wherein the response data of the battery further comprises at least one of temperature information detected by the temperature sensor, deformation information detected by the swelling/expansion sensor and internal defect information detected by the ultrasound sensor.

9. The BESS according to claim 8, wherein the SOH evaluation of the battery is based on at least one of the AC impedance curve versus time, the DC impedance curve versus time, the temperature information detected by the temperature sensor, the deformation information detected by the swelling/expansion sensor, the internal defect information detected by the ultrasound sensor, the capacity of the battery and the open circuit voltage (OCV) curve of the battery.

10. The BESS according to any of claims 1 to 9, further comprising:
a battery management system (BMS), wherein the at least one sensor is arranged within the BMS or is separated from the BMS.

11. A method for a battery energy storage system (BESS) comprising a power converter system (PCS), at least one sensor, and a plurality levels of controller distributed in the BESS, the method comprising:
charging/discharging, via the PCS, a battery including at least one battery module by using a superimposed control signal in which an electrochemical impedance spectra (EIS) reference signal for a state of health (SOH) evaluation of the battery is superimposed on a control signal for charging/discharging the battery, wherein the EIS reference signal has a frequency selected for EIS;
detecting, via at least one sensor, response data of the battery in the charging/discharging by the superimposed control signal;
wherein the respective levels of controller are in communication with each other and the response data of the battery are accessible to the respective levels of controller, and
wherein the SOH evaluation of the battery is conducted in such a dynamic manner that the response data of the battery is processed at any level of controller to obtain a result for the SOH evaluation.

12. The method according to claim 11, wherein each battery module includes at least one battery cell, and wherein the plurality levels of controller comprise a first level of controller configured to process the response data of the battery module, or each or part of the at least one battery cell in the battery module, and
wherein the processing at the first level of controller is determined based on a traffic load of the communication among the respective levels of controller and/or a processing capability of the first level of controller.

13. The method according to claim 11 or 12, wherein the plurality levels of controller comprise a second level of controller configured to process the response data of a plurality of the battery modules on a same rack among the at least one battery module, each or part of the plurality of the battery modules on the same rack, or each or part of the at least one battery cell in the battery module, and
wherein the processing at the second level of controller is determined based on a traffic load of the communication among the respective levels of controller and/or a processing capability of the second level of controller.

14. The method according to claim 13, wherein the plurality levels of controller comprise a third level of controller configured to process the response data of the at least one battery module on different racks, the plurality of the battery modules on the same rack among the at least one battery module, each or part of the plurality of the battery modules on the same rack, or each or part of the at least one battery cell in the battery module, and
wherein the response data are transmitted from the second level of controller before or after being processed at the second level of controller.

15. The method according to claim 14, wherein the third level of controller is further configured to control superimposition of the EIS reference signal on the control signal for charging/discharging the battery.
